# EUROPEAN PATENT APPLICATION

(11) **EP 1 070 949 A1**
(43) Date of publication of application: **24.01.2001**
(21) Application number: 00107528.2
(22) Date of filing: 07.04.2000
(51) Int. Cl.: G01M 11/00

(54) **Optical fiber multi-port measurement**

(71) Applicant: Agilent Technologies, Palo Alto, CA 94303-0870 (US)
(72) Inventor: Hoffmann, Peter, 71034 Böblingen (DE); Müller, Emmerich, 71134 Aidlingen (DE)
(74) Representative: Barth, Daniel

(57) **Abstract**

Disclosed is a beam-blocking device (70) for an optical power measurement of an optical multi-port device (310) having a plurality of optical ports (20A, 20B, etc.), wherein the beam-blocking device (70) is located between an end-connection (30) of the multi-port device (310) to be measured and an optical detector (50). For each one of the plurality of optical ports (20A, 20B, etc.), the beam-blocking device (70) comprises means for either blocking an individual optical beam from that port (20A, 20B, etc.) to pass through to the detector (50), or for letting the individual optical beam pass through the beam-blocking device (70) to the detector (50) substantially without changing the characteristics of the optical beam.

## Description

### BACKGROUND OF THE INVENTION

The present invention relates to optical power measurements of an optical multi-port device having a plurality of optical ports.

Optical power measurements are usually employed to measure insertion loss, return loss, polarization dependant loss, and cross-talk of passive optical devices and/or to measure the output power of active optical devices.

More recent optical devices, such as multiplexers, de-multiplexers or optical cross-connects, often contain multiple optical inputs and outputs (normally referred to as ports) with up to 2000 and even more ports per device. Such multi-port devices are usually connected using so-called ribbon fibers and ribbon connectors containing multiple ports (typically 8 or 12) in one connector. An example of such a ribbon connector is shown e.g. in http://www.molex.com/product/fiber/fomtcabl.html.

For optical multi-port measurements, usually n optical ports of an optical connector (such as a ribbon connector) of a device under test (DUT) are connected to a fan-out cable with n single-port output connectors. Two methods are commonly employed:
1. The single-port output connectors of the fan-out cable are connected to n power detectors.
2. The n single-port output connectors of the fan-out cable are connected to n inputs of an optical nx1 switch. The output of the switch is connected to one power detector.

Disadvantageous in the two aforementioned measuring methods generally is that the connection from the (ribbon fiber) output connector of the DUT to the fan-out cable reduces the accuracy of the power measurement. Furthermore, for measuring its insertion loss and total cross-talk, n² measurements have to be executed. Another drawback in method 1 is that n power detectors are required for performing the measurements. A further drawback in method 2 also is that the additional optical switch further reduces the measurement accuracy and speed.

### SUMMARY OF THE INVENTION

It is an object of the present invention to provide a measurement for optical multi-port devices that at least partly overcomes the outlined disadvantages as known in the art.

The object is solved by the independent claims. Preferred embodiments are shown by the dependent claims.

The invention provides a beam-blocking device applicable for optical power measurements of multi-port devices. The beam-blocking device is inserted between the multi-port device to be measured and an optical detector. The general characteristics of the beam-blocking device is that each optical beam from each individual port will either be blocked or passed through the beam-blocking device, however, without changing the characteristics of the passed-through optical beam. That means that if an individual beam from an individual port is blocked by the beam-blocking device, it will not reach the optical detector and will thus not be measured. On the other hand, if an individual beam from an individual port will be passed through the beam-blocking device, it will simply be passed through the beam-blocking device without any additional connection, reflection or other influencing source which might change the characteristics of that individual beam.

The beam-blocking device according to the invention provides a plurality of positions wherein one or more individual beams from the multi-port device will be passed through simultaneously. The number and composition of individual beams which are allowed to pass through the beam-blocking device can be defined for each position in accordance with the specific requirements for the measurement. For measuring an n-port device, the beam-blocking device preferably provides n positions wherein only one of the beams will be passed through, so that each individual port can be measured individually without measuring the beam from another port. The beam-blocking device might then further, or alternatively thereto, contain positions wherein more than one individual beams will be passed through concurrently, whereby each combination of the ports can be achieved.

The beam-blocking device according to the invention can be embodied by means of a turnable wheel, whereby the turnable wheel comprises a plurality of segments (each segment corresponding to one or more positions) with different blocking and passage characteristics (provided e.g. by respective hole patterns) for the respective ports.

Instead of a turnable wheel, any other movable device, e.g. a longitudinal stencil can be applied accordingly. The different areas of the stencil may have individual hole patterns to achieve required measurement functions.

The beam-blocking device can also be accomplished by an arrangement with an adjustable slit aperture, where the slit width can be adjusted, so that one or more ports are blocked or allowed to pass. The adjustable slit aperture might be provided by two plates or the like, which can be moved either towards or against each other, thus decreasing or increasing the slit width for covering less or more of the ports. In case that both plates are movable, not only the slit width but also the position of the slit with respect to the multiple ports can be varied. This easy but highly flexible solution can already be sufficient in case that only adjacent ports (i.e. ports located directly next to each other) have to be measured concurrently. In case that non-adjacent ports (i.e. ports located with at least one other blocked port in-between) have to be measured concurrently, a more complex solution e.g. with more than 2 plates will have to be applied.

The beam-blocking device can be varied in its individual positions either manually or automatically e.g. by means of a motor.

For providing information about the blocking and passage characteristics in each respective position of the beam-blocking device, each position might be coded or otherwise marked. This coding or marking can then be requested from a device analyzing the measurements in order to assign each measurement to the specific arrangement of ports for which the optical beam will be allowed to pass through to the detector. Instead of having a coding for each individual position, the measurements can also be started at a defined starting position, whereby the sequence of successive positions together with the timing of the changes in position has to be known. This can be achieved e.g. by means of the turnable wheel which can be turned (e.g. stepwise) between the different positions (e.g. clockwise or counterclockwise) with a pre-given speed of rotation.

In a preferred embodiment, the beam-blocking device according to the invention is provided together with the optical detector. The detector area is preferably selected to cover the optical beams of all optical ports from the connector to be measured. Preferably, a large area power detector is employed.

It is clear that the invention can be partly or entirely embodied by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).
- Fig. 1: shows a measurement setup 10 according to the invention, for executing optical power measurements of an optical multi-port device,
- Fig. 2: shows parts of the measuring setup 10 (as shown in Fig. 1) as can be seen from a view from the direction of arrow A, and
- Fig. 3: shows a preferred measurement arrangement 300 for providing multi-channel fiber measurements

### DETAILED DESCRIPTION OF THE INVENTION

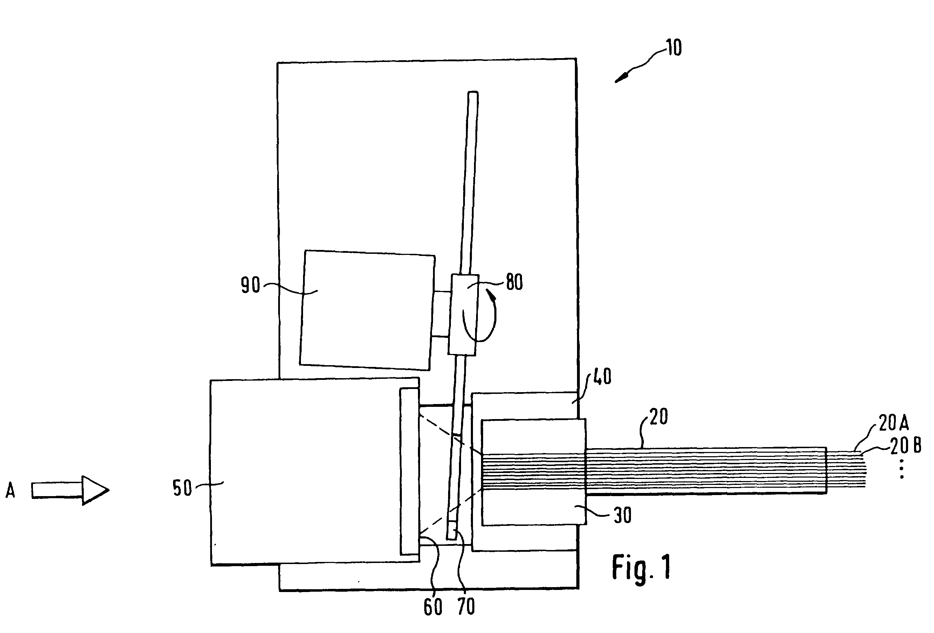

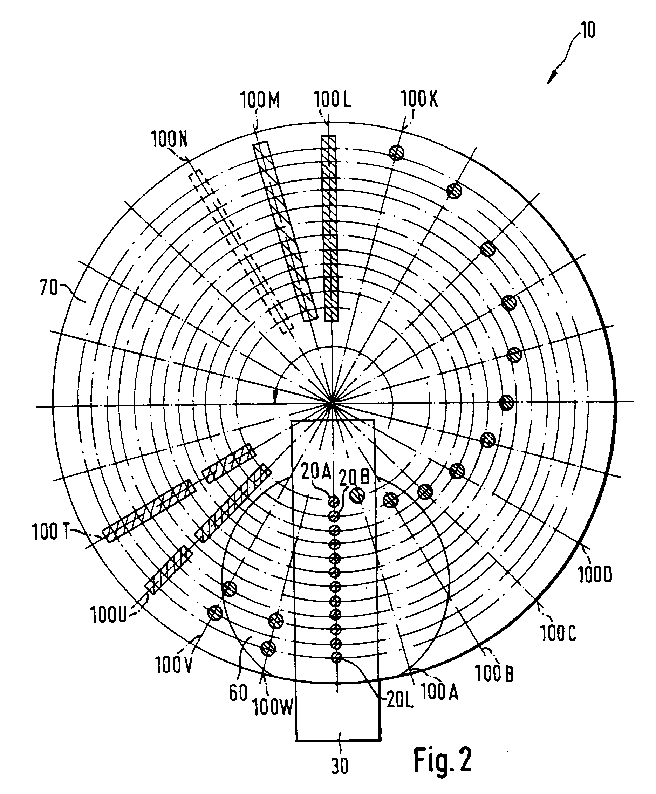

Fig. 1 shows a measurement setup 10 for executing optical power measurements of an optical multi-port device providing as an output a multi-fiber cable 20 with a multi-fiber connector 30 at the end of the multi-fiber cable 20. The multi-fiber cable 20 comprises a plurality of fibers 20A, 20B, etc. The multi-fiber connector 30 is positioned into a connector holder 40 for positioning the multi-fiber connector 30 within the measuring setup 10. The connector holder 40 simply defines the arrangement of the fibers 20A, 20B, etc. that leaves the end of those fibers 20A, 20B, etc. open without providing any kind of connection thereto. This can also be seen from Fig. 2, which shows the measuring setup 10 together with the multi-fiber cable 20 as seen from the direction of angle A.

Opposite to the connector holder 40, an optical detector (or optical powermeter) 50 is arranged in the measuring setup 10. The detector 50 is arranged in a way that a detector area 60 can cover all optical beams which might be provided by the multi-fiber cable 20 and which are emitted at the end of the multi-fiber connector 30. Preferably, a large area power detector 60 is employed. Furthermore, the distance between the detector area 60 and the end of the multi-fiber connector 30 is preferably provided as short as possible.

Between the end of the multi-fiber 30 and the detector area 60, a beam-blocking device 70 is provided, which can be better seen from Fig. 2. The beam-blocking device 70 is rotatabie around an axis 80 by means of a motor or actuator 90. During rotation, the beam-blocking device 70 will not change its position as depicted in the side view of Fig. 1.

As indicated in Fig. 1, the beam-blocking device 70 is preferably arranged slightly tilted with respect to the end surface as provided by the multi-fiber connector 30 and/or the detector area 60. This is in order to avoid that back-reflected light of the blocked beams is reflected back into the multi-fiber array.

Fig. 2 shows parts of the measuring setup 10 (as shown in Fig. 1) as can be seen from a view from the direction of the arrow A. However, it is to be understood that the view of Fig. 2 is not a technical drawing but merely explains the functioning of the beam-blocking device 70 in combination with the arrangement of the detector 50 and the fibers 20A, B, etc.

In the example of Fig. 2, the multi-fiber cable 20 comprises 12 individual fibers 20A, B, ... 20L. The detector 50 is arranged so that the detector area 60 will cover beams emitted from any one of the fibers 20A, ..., 20L.

In the example of Fig. 2, the beam-blocking device 70 is represented by a wheel with a plurality of different sections 100A, 100B, etc., whereby each section provides a different blocking/passage characteristic for optical beams provided from the multi-fiber cable 20 towards the detector 50. In section or position 100A of the example of Fig. 2, only an optical beam provided from fiber 20A will be passed through towards the detector 50, while all other fibers 20B, ..., 20L will be blocked and no light from these fibers can transmit towards the detector area 60. Accordingly, section or position 100B will block fiber 20A and fibers 20C, ..., 20L, and only light from fiber 20B will be passed through. The corresponding blocking/passage characteristic also applies for the sections 100C to 100K, whereby only one of the fibers 20C to 20L will have a passage to the detector 50 and all others will be blocked. By means of those sections 100A, ..., 100K, each one of the fibers 20A, ..., 20L can be measured individually and independently of the respective other fibers.

For determining the power of each individual fiber as well as the sum of all emitting fibers of the multi-fiber arrangement , the beam-blocking device 70 in the example of Fig. 2 further comprises a section 100L, wherein all beams from the fibers 20A, ..., 20L will be passed through to the detector 50. A section 100M represents a powermeter zero path, wherein all beams from all fibers of the multi-fiber arrangement are blocked. In this position, a "Zero" power reference measurement can be performed to eliminate any parasitic offsets of the detector arrangement.

Further combinations of plural fiber channels allowed to pass through the beam-blocking device 70 to the detector 50 are shown as examples in the sections 100T, ..., 100W. It is clear that any blocking/passage characteristics can be achieved by selecting a respective combination of fiber channels 20i (i = A, ..., L) either being blocked or being allowed to pass through.

Some examples for specific blocking/passing combinations shall now be described in more detail:
- Sections 100T and 100U are used to determine the crosstalk from one individual fiber to all other fibers. In this case, the beam of one fiber is blocked and all other beams pass through. By adding multiple sections where just one fiber is blocked and all others pass through, the crosstalk of each individual fiber in respect to all others can be determined.
- Section 100W and 100V are used to determine the crosstalk from one fiber to two fibers/channels arranged left/right to the port of interest. This kind of crosstalk measurement is applied when due to the application or device technology only the neighborhood channels are of interest in terms of crosstalk performance.
- Section 100A to 100K are to determine the individual output power, insertion loss, polarization dependent loss for a single fiber/channel
- Section 100A to 100K allows also to determine the total crosstalk from all other channels to one individual channel. This can be achieved by applying signals to all blocked fibers and measuring the pass through fiber while no signal is applied to this fiber/channel.

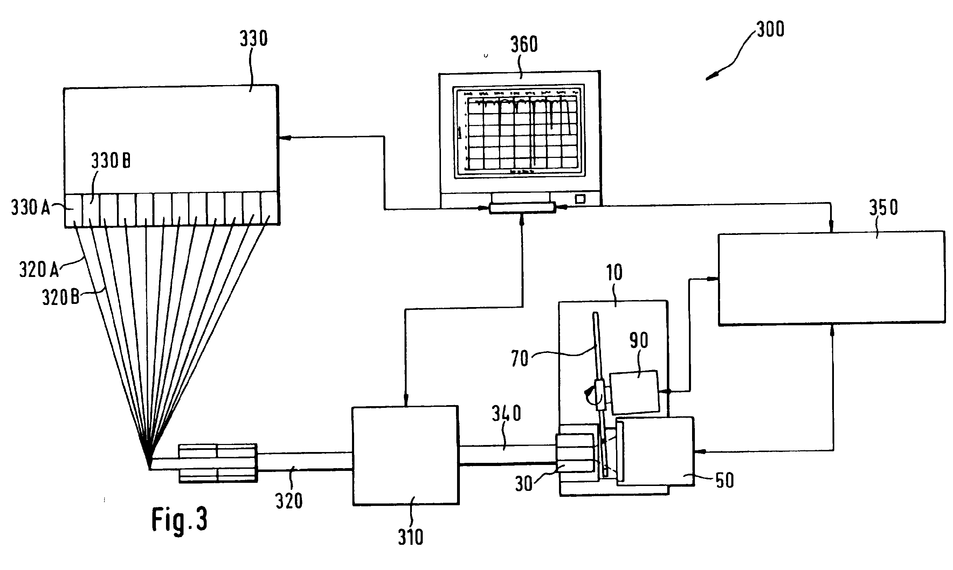

Fig. 3 shows a preferred measurement arrangement 300 for providing multi-channel fiber measurements. A device under test DUT 310 with a multi-fiber input cable 320 is connected therewith to a multi-channel light source 330, which can be provided by a plurality of tunable wavelength sources and/or by fixed wavelength sources. The multi-fiber input cable 320 comprises a plurality of individual fibers 320A, 320B, etc., each of which being coupled to outputs 330A, 330B, etc. of the multi-channel light source 330. It is clear that instead of coupling all fibers 320A, 320B, etc. to the outputs 330A, 330B, etc., also any other subset of connecting, depending on the desired measurements to be executed, can be applied accordingly. Each output 330A, 330B, etc. of the multi-channel light source 330 is adapted to provide a stimulus signal to the respective individual fiber 320A, 320B, etc. of the DUT 310.

The output of the DUT 310 is provided by a multi-fiber output cable 340, also comprising a plurality of individual fibers 340A, 340B, etc. The multi-fiber output cable 340 connects the DUT 310 with the measuring setup 10 as shown in Fig. 1. Accordingly, the multi-fiber output cable 340 represents the multi-fiber cable 20 in Fig. 1.

An optical power meter 350 is coupled to the detector 50 for providing a calibrated, digitized optical power measurement result out of the detector signal. The optical power meter 350 further controls the actuator 90 for positioning the beam-blocking device 70.

A measurement controller 360, which can be a data processing device such as a computer or PC, is coupled to the optical power meter 350, the DUT 310, and the multi-channel light source 330 for controlling each of those devices. The controller 360 controls the setup and measurement synchronization of the sources and the power meter, e.g. to perform a measurement vs. source wavelength or to perform loss and crosstalk measurements for different input ports.

Thus, the optical power of the optical beams of a well-known selection of the optical output ports 340A, 340B, etc. of the DUT 310 can be measured at a given time. As there is no connecting device between the multi-fiber connector 30 and the detector 50, high measurement accuracy is achievable.

## Claims

1. A beam-blocking device (70) adapted for an optical power measurement of an optical multi-port device (310) having a plurality of optical ports (20A, 20B, etc.), wherein the beam-blocking device (70) is located between an end-connection (30) of the multi-port device (310) to be measured and an optical detector (50),
characterized in that for each one of the plurality of optical ports (20A, 20B, etc.), the beam-blocking device (70) comprises means for either blocking an individual optical beam from that port (20A, 20B, etc.) to pass through to the detector (50), or for letting the individual optical beam pass through the beam-blocking device (70) to the detector (50) substantially without changing the characteristics of the optical beam.

2. The beam-blocking device (70) of claim 1, characterized in that the beam-blocking device (70) provides a plurality of positions, wherein one or more individual beams from the multi-port device (310) will be passed through simultaneously.

3. The beam-blocking device (70) of claim 2, characterized in that the number and composition of individual beams which are allowed to pass through the beam-blocking device can be defined for each position in accordance with a specific requirement for a measurement.

4. The beam-blocking device (70) of claim 2 or 3, characterized in that, for measuring an n-port device, the beam-blocking device (70) comprises n positions wherein only one of the beams will be passed through, so that each individual port can be measured individually without measuring the beam from another port.

5. The beam-blocking device (70) of any one of the claims 2-4, characterized in that the beam-blocking device (70) comprises positions wherein more than one individual beams will be passed through concurrently.

6. The beam-blocking device (70) of any one of the claims 1-5, comprising a movable device, preferably a turnable wheel, with a plurality of segments (100) with different blocking and passage characteristics

7. The beam-blocking device (70) of claim 6, wherein each segment (100) comprises pattern with one or more holes, whereby each hole represents one means for letting the individual optical beam pass through.

8. The beam-blocking device (70) of any one of the claims 2-7, characterized in that the blocking and passage characteristics of each position is coded or otherwise marked.

9. A system (10) for providing an optical power measurement of an optical multi-port device (310) having a plurality of optical ports (20A, 20B, etc.), the system comprising:
an optical detector (50), and
a beam-blocking device (70) according to any one of the above claims, whereby the beam-blocking device (70) is located between an end-connection (30) of the multi-port device (310) to be measured and the optical detector (50),

10. The system (10) of claim 9, wherein a detector area (60) of the optical detector (50) covers the optical beams of all optical ports from the multi-port device (310).

11. A method for providing an optical power measurement of an optical multi-port device (310) having a plurality of optical ports (20A, 20B, etc.), wherein a beam-blocking device (70) according to any one of the claims 1-9 is located between an end-connection (30) of the multi-port device (310) to be measured and an optical detector (50), the method comprising the steps of:
(a) in a first position of the beam-blocking device (70), blocking one or more individual optical beams from the plurality of optical ports (20A, 20B, etc.) to pass through to the detector (50), and/or letting one or more individual optical beams of others of the plurality of optical ports (20A, 20B, etc.) pass through the beam-blocking device (70) to the detector (50) substantially without changing the characteristics of the optical beam,
(b) measuring the optical power of the one or more individual optical beams passed through the beam-blocking device (70) to the detector (50) in step (a),
(c) in a second position of the beam-blocking device (70), blocking one or more individual optical beams, others than in step (a), from the plurality of optical ports (20A, 20B, etc.) to pass through to the detector (50), and/or letting one or more individual optical beams, others than in step (a), of others of the plurality of optical ports (20A, 20B, etc.) pass through the beam-blocking device (70) to the detector (50) substantially without changing the characteristics of the optical beam, and
(d) measuring the optical power of the one or more individual optical beams passed through the beam-blocking device (70) to the detector (50) in step (c).

12. A software program, adapted to be stored on or otherwise provided by any kind of data carrier, for executing the steps of the method of claim 11 when run in or by any suitable data processing unit such as a computer.
